(19) Europäisches Patentamt
European Patent Office
Office européen des brevets

(11) **EP 3 529 100 B1**

(12) **FASCICULE DE BREVET EUROPEEN**

(45) Date de publication et mention
de la délivrance du brevet:
**19.08.2020 Bulletin 2020/34**

(21) Numéro de dépôt: **17793715.8**

(22) Date de dépôt: **13.10.2017**

(51) Int Cl.:
***B60K 28/06*** **(2006.01)**

(86) Numéro de dépôt international:
**PCT/FR2017/052826**

(87) Numéro de publication internationale:
**WO 2018/073516 (26.04.2018 Gazette 2018/17)**

(54) **SYSTEME D'AIDE A LA CONDUITE D'UN VEHICULE COMPRENANT UN SMARTPHONE ET UN DISPOSITIF INTERFACE DEPORTE**

FAHRERASSISTENZSYSTEM FÜR EIN FAHRZEUG MIT EINEM SMARTPHONE UND EINER FERNSCHNITTSTELLENVORRICHTUNG

DRIVER-ASSISTANCE SYSTEM FOR A VEHICLE COMPRISING A SMARTPHONE AND A REMOTE INTERFACE DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.10.2016 FR 1670613**

(43) Date de publication de la demande:
**28.08.2019 Bulletin 2019/35**

(73) Titulaire: **Coyote System**
**92150 Suresnes (FR)**

(72) Inventeurs:
• **VAN LAETHEM, Jean-Marc**
**60810 Rully (FR)**
• **PIERLOT, Fabien**
**75016 Paris (FR)**

(74) Mandataire: **Demulsant, Xavier et al**
**Dejade & Biset**
**35, rue de Châteaudun**
**75009 Paris (FR)**

(56) Documents cités:
**EP-A1- 0 903 264     FR-A1- 2 896 462**

## Description

La présente invention concerne un système d'aide à la conduite d'un véhicule comprenant un smartphone et un dispositif interface déporté qui lui est associé, permettant d'afficher dans une zone unique de ce dernier et suivant un ordre de priorité hiérarchisé et défini dans une application du smartphone ou en mémoire du dispositif associé, des informations en temps réel sur la conduite du véhicule dans lequel il est disposé.

La présente invention concerne également un procédé de mise en œuvre d'un tel système.

On entendra dans le présent texte par « smartphone » tout appareil téléphonique ou tablette disposant d'un module de localisation GPS et d'une connexion de type GSM « voix » et/ou « data » ainsi que d'une connexion de type Bluetooth, Wifi ou filaire USB et étant en mesure de charger et d'exécuter un programme ou une application.

On connaît par le brevet FR 2 896 462 un système d'aide à la conduite d'un véhicule comprenant : une installation embarquée pourvue de moyens de localisation par satellites, un serveur distant dans lequel sont stockés des paramètres spécifiques de l'installation embarquée, des moyens de communication de ce serveur avec la station embarquée et avec une station de communication, l'installation embarquée comportant des moyens aptes à lui permettre l'envoi d'informations vers le serveur.

On a proposé dans le brevet EP 0 903 264 un système d'affichage d'informations concernant des états sur le fonctionnement d'un véhicule automobile réalisant un filtrage et une classification des informations délivrées au conducteur, ces informations lui étant délivrées sous forme cyclique suivant une règle de priorité.

On connaît également de nombreuses applications téléchargeables sur des smartphones qui permettent à un conducteur automobile d'accéder à des services divers d'aide à la conduite, tels que notamment la navigation, la localisation des radars, l'intensité du trafic, la recherche de parkings ou de stations à essence, l'évaluation de la qualité de conduite etc ...

On sait que, dans de telles applications, pour parvenir à l'aide souhaitée, le conducteur du véhicule doit d'abord sélectionner sur l'écran de son smartphone l'icône relative à l'application appropriée qu'il souhaite charger dans la mémoire de ce dernier. Or cette icône se trouve située parmi une grande quantité d'autres icônes, si bien que, pour la repérer, il est contraint de faire défiler plusieurs pages et ensuite de sélectionner l'application trouvée. Il doit enfin, une fois dans la bonne application, interagir avec celle-ci pour parvenir à activer le service souhaité. Il doit ensuite, en cours d'usage et pendant sa conduite, se repérer parmi les diverses informations affichées pour trouver les informations qui l'intéressent ou valider par un « touché » dans une zone variable de l'écran des renseignements qui lui sont communiqués par le système. Ces diverses opérations se faisant habituellement lorsque le véhicule est en cours de déplacement, on comprend qu'elles constituent de multiples sources de distraction pour le conducteur.

Or on sait, par des études menées en matière d'accidentologie, que les conducteurs qui téléphonent en conduisant multiplient par quatre les risques d'être impliqués dans un accident. Il a ainsi été estimé en France, par les autorités de sécurité routière, qu'un accident sur dix était dû à la manipulation d'un téléphone au volant. La situation est encore plus grave en ce qui concerne la lecture et surtout la saisie et l'envoi de SMS, dans la mesure où ces derniers imposent au conducteur de quitter la route des yeux pendant quelques secondes.

En ce qui concerne le domaine des communications téléphoniques, on a proposé de faire appel à un « téléphone mains libres » qui permet de réduire le temps de manipulation du téléphone par le conducteur. De tels dispositifs, qu'ils soient intégrés au véhicule ou disposés dans celui-ci en tant qu'accessoires, permettent une gestion simplifiée des appels aussi bien en émission qu'en réception.

Cependant ces dispositifs n'apportent aucune solution à l'utilisation d'applications chargées sur un smartphone et réduisent tout au plus les risques de distraction liés à la manipulation d'un téléphone, si bien qu'ils n'apportent pas de solution réellement efficace au problème.

On comprend donc, qu'en terme de sécurité routière et de prévention des accidents, il est fondamental de limiter, lors de la conduite, l'utilisation par un conducteur d'un appareil de communication portable, que celui-ci soit de type vocal ou de type visuel, et notamment de type smartphone.

La présente invention a pour but de proposer un système d'aide à la conduite permettant de supprimer toute action directe d'un conducteur en cours de conduite avec un smartphone tout en lui permettant de bénéficier de toute l'aide à la conduite que les applications chargées sur ce smartphone sont en mesure de lui apporter.

La présente invention a ainsi pour objet un système d'aide à la conduite d'un véhicule selon la revendication 1.

Selon une variante particulière, l'ordre de priorité sera préférentiellement suivant l'ordre décroissant du niveau d'importance.

Le dispositif interface déporté du système d'aide à la conduite suivant l'invention pourra comporter des moyens aptes à recevoir de sources externes génératrices d'informations, des informations à prendre en compte. Par ailleurs ledit ordre de priorité pourra être défini dans une mémoire du dispositif interface déporté et/ou dans une application spécifique enregistrée dans une mémoire du smartphone.

Le smartphone et/ou le dispositif interface déporté pourra comporter des moyens sélecteurs d'informations aptes à permettre la sélection, notamment avant le début d'un trajet, des informations à prendre en compte, et le smartphone ou le dispositif interface déporté pourra comporter des moyens séquenceurs aptes à sélectionner successivement des informations émises par le smartphone et/ou des sources externes génératrices d'informations.

Par ailleurs le smartphone et/ou le dispositif interface déporté pourra comporter des moyens aptes à déterminer, pour chaque information à prendre en compte, une variable pertinente, et le smartphone et/ou le dispositif interface déporté pourra comporter des moyens aptes à attribuer un niveau d'importance aux informations à prendre en compte en fonction de la valeur de cette variable pertinente selon des critères prédéfinis.

Ces dits critères pourront être prédéfinis dans une table de profil propre à chacune des informations à traiter par le système. Cette table de profil pourra contenir également la variable pertinente et le niveau d'importance respectivement associé à au moins un seuil de valeur de la variable pertinente. Par ailleurs la table de profil pourra contenir la nature et/ou la forme du message à délivrer.

Le système d'aide à la conduite pourra comporter des moyens aptes à déterminer la valeur instantanée de la variable pertinente.

De façon intéressante le dispositif interface déporté pourra comporter des moyens aptes, en cas de non connexion temporaire avec le smartphone, à passer dans un mode dit simplifié. Notamment pour une telle situation, le dispositif interface déporté pourra comporter au moins un accéléromètre et/ou au moins un GPS.

Suivant l'invention le dispositif interface déporté comportera des moyens d'affichage aptes à délivrer les informations hiérarchisées dans une zone d'affichage principal, préférentiellement disposée au centre des moyens d'affichage.

Dans un mode de mise en oeuvre de l'invention, le dispositif interface déporté comportera des moyens aptes, via un module de communication courte distance, par exemple de type « Bluetooth », à détecter et recenser les différentes personnes présentes dans le véhicule par une émission du module de communication courte distance de leur smartphone.

La présente invention a également pour objet un procédé d'aide à la conduite d'un véhicule, mettant en œuvre un système d'aide à la conduite comprenant un smartphone et un dispositif interface déporté qui sont connectables entre eux et qui possèdent des moyens aptes à délivrer des messages sous forme visuelle et/ou sonore, caractérisé en ce qu'il comporte les étapes consistant à :

- sélectionner des informations à prendre en compte par le système,
- consulter, pour chacune de ces informations à prendre en compte, une table de profil comprenant une variable pertinente et un certain niveau d'importance,
- délivrer séquentiellement les messages sous une forme hiérarchisée, notamment par ordre décroissant de niveau d'importance.

Ce procédé pourra comporter une étape consistant à balayer séquentiellement les informations à prendre en compte reçues, afin de déterminer, par référence à la table de profil associée à chaque information, le niveau d'importance de la valeur instantanée de la variable pertinente associée à cette information.

Ce procédé pourra également comporter une étape consistant à:

- mettre dans une pile les trames des informations prises en compte reçues successivement,
- consulter, pour chaque information de cette pile, la table de profil associée à cette information, de façon à compléter la trame de chaque information de la pile avec des éléments de la table de profil associée à cette information,
- classer la pile par ordre décroissant de niveau d'importance,
- délivrer séquentiellement les messages par ordre décroissant de niveau d'importance.

On décrira ci-après, à titre d'exemple non limitatif, des formes d'exécution de la présente invention, en référence au dessin annexé sur lequel :

- la figure 1 est une vue schématique d'un système d'aide à la conduite suivant la présente invention comprenant un dispositif interface déporté, un smartphone, et un module dit OBD,
- la figure 2 est une vue schématique d'un premier exemple de l'architecture interne d'un système d'aide à la conduite suivant l'invention qui est mis en œuvre sous le contrôle d'un processeur,
- la figure 3 est un ordinogramme d'un premier exemple de différentes étapes de fonctionnement d'un système d'aide à la conduite suivant l'invention,
- la figure 4 est une vue schématique d'un second exemple de l'architecture interne d'un système d'aide à la conduite suivant l'invention qui est mis en œuvre sous le contrôle d'un processeur,
- la figure 5 est un ordinogramme d'un second exemple de différentes étapes de fonctionnement d'un système d'aide à la conduite suivant l'invention,
- la figue 6 est une vue schématique d'un système d'aide à la conduite suivant l'invention dans lequel le dispositif interface déporté est apte à fonctionner lors d'une déconnexion temporaire avec le smartphone qui lui est associé,

- la figure 7 est une vue schématique de l'architecture interne du dispositif interface déporté représenté sur la figure 6,
- la figure 8 est un schéma d'un exemple de fonctionnement du système d'aide à la conduite suivant l'invention au cours de l'évolution dans le temps de trois informations,
- la figure 9 est une vue en plan d'un exemple d'interface d'affichage d'un dispositif interface déporté suivant l'invention.

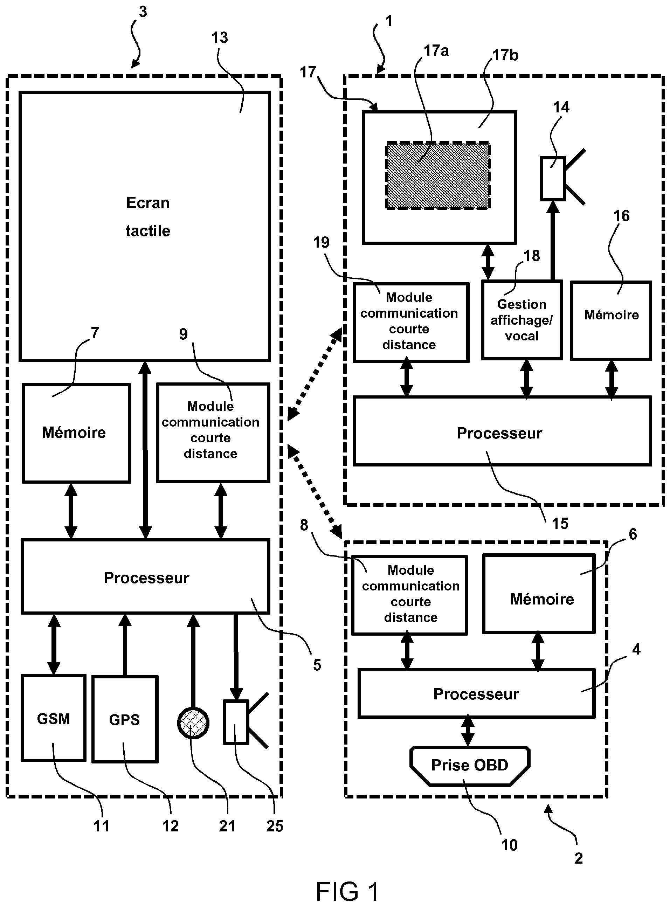

On a représenté sur la figure 1 un système d'aide à la conduite suivant la présente invention qui comprend essentiellement un dispositif interface déporté 1 et un smartphone 3. On a également représenté un module 2 dit « On Board Diagnostic », dénommé OBD dans le présent texte, qui est connecté aux véhicules automobiles et qui fournit, via une prise spécifique 10 intégrée à ces derniers, les paramètres moteur essentiels.

De façon classique le smartphone 3 comprend un processeur 5 auquel est associée une mémoire 7 ainsi qu'un module de communication à courte distance 9 de type Bluetooth, Wifi ou filaire USB. Il comprend également un module de communication 11 de type GSM « voix » et « data », un écran d'affichage 13 de type tactile, un module GPS 12, un microphone 21 et un haut-parleur 25.

Le dispositif interface déporté 1 comprend quant à lui un processeur 15 auquel est associée une mémoire 16, une dalle d'affichage 17 dont au moins une partie 17a est de type tactile et dénommée ci-après « zone d'affichage principale », un haut-parleur 14 et un module de communication à courte distance 19 de type Bluetooth, Wifi ou filaire USB lui permettant de communiquer avec le module de communication courte distance 9 du smartphone 3 ou avec un module de communication courte distance 8 du module OBD 2.

De façon connue, ce dernier comprend un processeur 4 auquel est associée une mémoire 6, le module de communication courte distance 8 et la prise OBD 10 précédemment cités, cette dernière permettant de le relier à une prise OBD complémentaire afin de permettre de lire les informations fournies par celui-ci.

Suivant l'invention, le dispositif interface déporté 1 constitue une sorte d'interface du smartphone 3, si bien qu'une fois le processus engagé, et notamment en cours de conduite, le conducteur n'aura plus en aucune façon à intervenir sur le smartphone 3, et tous les messages qu'il recevra et/ou toutes les instructions qu'il donnera le seront à partir du dispositif interface déporté 1.

A cet effet, la dalle d'affichage 17 de ce dernier comporte plusieurs zones, à savoir la zone tactile 17a précitée, dite zone d'affichage principale, généralement disposée dans une partie centrale de la dalle d'affichage 17, qui est une zone privilégiée d'affichage hiérarchisé et séquencé, c'est-à-dire une zone dans laquelle viendront s'afficher, de façon séquentielle, des informations suivant un ordre hiérarchisé, ainsi qu'expliqué ci-après, et au moins une zone d'affichage secondaire 17b dans laquelle seront affichées des informations non hiérarchisées mais néanmoins intéressantes pour la conduite. Selon les réalisations, et en fonction des besoins de celles-ci en termes d'interface tactile, seulement la zone d'affichage principale 17a ou l'intégralité de la dalle d'affichage 17 sera de type tactile.

Une application spécifique d'aide à la conduite est chargée dans la mémoire 7 du smartphone 3. Cette application est en mesure, de façon classique, de fournir au conducteur de multiples informations en rapport avec la conduite en cours ainsi qu'avec l'environnement dans lequel son véhicule est localisé par son système de localisation intégré, à savoir le module GPS 12.

Suivant l'état antérieur de la technique, toutes ces informations sont habituellement fournies au conducteur soit en permanence soit au fur et à mesure de leur génération par le système. La plupart du temps ces informations se retrouvent simultanément affichées sur l'écran d'un smartphone voire même sur plusieurs « pages-écran » de celui-ci, que ces informations soient anecdotiques pour la conduite du véhicule ou qu'elles soient, au contraire, de toute première importance, imposant ainsi au conducteur de naviguer au travers de toutes ces informations pour atteindre celle qui lui est nécessaire à un instant donné pendant sa conduite. On comprend que ces diverses manipulations constituent une importante source de distraction pour le conducteur et donc un risque en termes de sécurité routière.

La présente invention se propose de ne fournir au conducteur, dans la zone d'affichage principale 17a du dispositif interface déporté 1, qu'une seule information à la fois, cette information étant l'information qui, en temps réel, est prioritaire sur les autres informations en ce qui concerne la conduite et la sécurité du conducteur et de son véhicule.

Le système suivant l'invention comporte ainsi des moyens aptes à :

- Définir le niveau d'importance $I$ des informations qui sont actives, c'est-à-dire des informations qui d'une part ont été considérées comme souhaitées par le conducteur notamment en début de trajet et qui, d'autre part, ont vu au cours de la navigation leur teneur changée ainsi qu'expliqué ci-après,
- Hiérarchiser ces informations actives suivant ce niveau d'importance $I$, de façon à les présenter au conducteur de façon séquentielle dans leur ordre de priorité décroissante,

- Choisir le mode de communication de l'information le plus approprié, en fonction du niveau d'importance $I$ de l'information considérée,
- Proposer au conducteur, si nécessaire, une solution d'acquittement de l'information qui lui a été communiquée.

Dans le présent mode de mise en œuvre, la mémoire 7 du smartphone 3 est chargée avec une application dédiée au pilotage du dispositif interface déporté 1, ainsi que précisé précédemment, et comporte une table, dite ci-après « Table des préférences de conduite » 48, comprenant une liste des informations que le conducteur souhaite qu'elles soient prises en compte lors d'un trajet. Cette sélection pourra se faire, par exemple, de façon individuelle en validant les informations souhaitées ou en invalidant les informations non souhaitées ou, de façon globale, en sélectionnant un modèle prédéfini. Ces informations sont par exemple, et de façon non exhaustive, notamment :

- Navigation : c'est-à-dire les instructions relatives au guidage du véhicule. Ex : « Tournez à gauche dans 50 mètres »,
- Autonomie carburant : c'est-à-dire une information relative à la distance que peut encore parcourir le véhicule avant de tomber en panne de carburant,
- Alerte radar : c'est-à-dire une information relative à la proximité d'un radar de contrôle de vitesse,
- Alerte zone de danger : c'est-à-dire une information de sécurité routière si le véhicule roule à une vitesse excessive dans une zone référencée comme dangereuse,
- Alerte gonflage : c'est-à-dire une information indiquant un état de gonflage déficient d'un pneumatique se situant sous un seuil de pression déterminé,
- Embouteillages : c'est-à-dire une information indiquant la formation d'un embouteillage se situant à une distance déterminée,
- Alerte éco-conduite : c'est-à-dire une information indiquant un dépassement de seuil relatif à la qualité de conduite du conducteur,
- Appels téléphoniques entrants,
- Etc...

Pour chacune des différentes informations que le système suivant l'invention est en mesure de fournir au conducteur il a été établi un « Profil » qui peut être notamment constitué sous la forme d'une table, désignée ci-après par « Table de profil » 46. Bien entendu les différentes tables de profil propres à chacune des différentes informations pourront être groupées au sein d'une table unique.

Les tables de profil, dans le présent exemple, sont contenues dans la mémoire 7 du smartphone 3 et précisent, ainsi qu'expliqué ci-après, la façon dont le processeur 5 devra traiter chacune de ces informations.

Chacune de ces tables de profil contient une variable dite « Variable pertinente » V c'est-à-dire la variable dont la valeur sera prise en compte par le processeur 5 pour déterminer la hiérarchie des informations.

On a reproduit ci-après, à titre d'exemple, une première table de profil qui concerne l'information « Autonomie carburant » du véhicule.

**Exemple 1 : Table de profil pour l'information « Autonomie carburant »**

| L1 | Nature de l'information | Autonomie carburant | | |
|---|---|---|---|---|
| L2 | Source du message | Données véhicule disponibles sur la prise OBD | | |
| L3 | Message délivré | «L'autonomie restante est de x km» | | |
| L4 | Variable pertinente | Autonomie A restante = (carburant disponible Q / consommation moyenne q)*100 | | |
| L5 | Unité de la variable pertinente | Kilomètre. La quantité de carburant disponible Q est exprimée en litres et la consommation moyenne q est exprimée en litres/100km | | |
| L6 | Seuils de la variable pertinente | A <= 50 km | 50 km <=A< = 100 km | 100 km<=A<=300 km |
| L7 | NiveauxImportance I | 8 | 5 | 1 |
| L8 | Media utilisé | Affiche écran complet et message sonore | Affichage écran et bip sonore | Affichage de l'autonomie restante |

(suite)

| | | | | |
|---|---|---|---|---|
| L9 | Message visuel à afficher | Jauge essence vide en rouge, autonomie restante en km | Jauge essence 2 barres et autonomie restante en km en orange | Jauge essence 6 barres en vert et autonomie restante en km |
| L10 | Message sonore à émettre | « Autonomie inférieure à 50 km. Faites le plein de carburant » | « Autonomie inférieure à 100 km, pensez à faire le plein de carburant » | |
| L11 | Durée d'affichage minimum si interruption | 10 sec | 5 sec | |
| L12 | Durée d'affichage maximum | 30 sec | 10 sec | |
| L13 | Action suite à un simple touché écran | Guidage vers station essence la plus proche | Guidage vers station essence habituelle | |
| L14 | Action suite à un glissé du doigt horizontal | 3 bips d'alerte carburant puis disparition du message puis retour à l'écran par défaut | Disparition message puis retour à l'écran par défaut | |
| L15 | Action suite à un glissé du doigt vertical | Retour à l'écran par défaut | Retour à l'écran par défaut | Retour à l'écran par défaut |
| L16 | Acquittement / actions possible par reconnaissance vocale | Acquittement : « OK », « OK autonomie », « OK carburant ». Guidage : « OK navigation carburant» | Acquittement : « OK », « OK autonomie », « OK carburant ». Guidage : « OK navigation carburant » | Acquittement : « OK », « OK autonomie », « OK carburant ». |

- ligne 1: définit l'information concernée,

- ligne 2: indique la source de l'information. En l'espèce l'information provient de la prise OBD 10 du véhicule,

- ligne 3: indique le contenu du message qui sera délivré à l'utilisateur par le dispositif interface déporté 1, que ce soit sous forme écrite via la dalle d'affichage 17 et/ou sous forme verbale via le haut-parleur 14,

- ligne 4: indique la « Variable pertinente $V$ », qui, en l'espèce, est constituée par l'autonomie restante, c'est-à-dire par le nombre $A$ de kilomètres restant au véhicule à parcourir avant qu'il soit à court de carburant. Ce paramètre $A$ est calculé par le processeur 5 à partir de la quantité de carburant $Q$ restant dans le réservoir à l'instant de la mesure, qui est une information disponible sur la prise OBD 10 du véhicule, et de la consommation moyenne $q$ au 100 km du véhicule qui est généralement calculée par l'ordinateur de bord et dont la valeur est également disponible sur la prise OBD 10. Et l'on aura :

$$A = Q/q * 100,$$

- ligne 5: indique l'unité de mesure dans laquelle est exprimée la variable pertinente $V$, en l'espèce des km,
- ligne 6: indique des valeurs de seuils à partir desquelles on prendra en compte la variable pertinente $V$ et à laquelle on attribuera un « Niveau d'importance $I$ ». Dans cet exemple on a considéré qu'il était intéressant de prendre en compte trois niveaux de seuil : un premier niveau lorsque l'autonomie en carburant $A$ est comprise entre 100 et 300 km, un niveau médian lorsque l'autonomie $A$ est comprise entre 50 et 100 km et un troisième niveau lorsque cette autonomie $A$ est inférieure à 50 km. Bien entendu, suivant l'invention, et en fonction de l'information considérée, on pourrait faire appel à un nombre de niveaux de seuil différent,
- ligne 7: indique pour chacun des trois niveaux de seuil précédents le « Niveau d'importance $I$ » de l'information active qui est présente. Ce niveau d'importance $I$ est fonction de la valeur de la variable pertinente autrement dit, dans le présent exemple, de l'autonomie en carburant $A$. Si cette autonomie est comprise entre 100 et 300 km il n'est pas très urgent pour le conducteur de se préoccuper du niveau de carburant de son véhicule et l'on donne au niveau d'importance $I$ une valeur faible, par exemple I=1. Si, par contre, l'autonomie $A$ est comprise entre 50 et 100 km on comprend qu'il est urgent pour le conducteur de se préoccuper du niveau de carburant de son véhicule et l'on attribue alors au niveau d'importance $I$ une valeur plus élevée, par exemple I=5. Enfin si l'autonomie $A$ devient inférieure à 50 km on comprend qu'il est impératif pour le conducteur de songer à trouver une station-service et l'on donne alors au niveau d'importance $I$ une valeur élevée, par exemple I=8.

- ligne 8: indique au système le ou les médias dans lesquels on souhaite que l'information soit délivrée au conducteur. Cette information est affichée sur l'écran du dispositif interface déporté 1, dans la zone d'affichage principale 17a, et peut être sonore ou non. Le tableau montre que, en fonction de la valeur du niveau d'importance $I$, le média utilisé peut varier,

- ligne 9: indique la présentation du message à afficher dans la zone d'affichage principal 17a et notamment la forme et la couleur de l'affichage. Les « barres » auquel il est fait référence sont des barres d'affichage superposées qui présentent l'avantage de donner un état de la valeur de la variable pertinente immédiatement appréciable sous forme analogique par le conducteur,

- ligne 10: indique le contenu du message sonore à délivrer, et ceci en fonction du niveau d'importance $I$ de la variable pertinente $V$,

- ligne 11: indique la durée minimale d'affichage du message, ou de prononciation du message vocal, pour le cas où la durée d'affichage du message devrait être tronquée en faveur d'un nouveau message disposant d'un niveau d'importance $I$ supérieur,

- ligne 12: indique la durée d'affichage maximal du message,

- ligne 13: indique l'action à effectuer suite à un « touché » de l'écran effectué par le conducteur lorsque le message est affiché. Par exemple, suite à la réception d'un message indiquant « Autonomie inférieure à 50 km. Faites le plein de carburant » un touché d'écran fait par le doigt du conducteur dans la zone d'affichage principal 17a va demander au processeur d'exécuter l'instruction mentionnée, à savoir, dans cet exemple, déclencher une procédure de guidage vers la station d'essence la plus proche,

- ligne 14: indique l'action à effectuer suite à un glissé horizontal du doigt du conducteur sur l'écran dans la zone d'affichage principal 17a,

- ligne 15: indique l'action à effectuer suite à un glissé vertical du doigt du conducteur sur l'écran dans la zone d'affichage principal 17a.

- ligne 16 : indique si le module de reconnaissance vocal du smartphone 3 doit être activé et quelles phrases doivent être reconnues pour acquitter l'information ou déclencher un processus automatiquement. Par exemple, tout message de type autonomie carburant peut être acquitté par un simple mot « OK » ou phrase « Ok carburant » et une navigation vers la station d'essence habituelle ou la plus proche peut être enclenchée par un « OK navigation carburant ».

On a représenté ci-après un second exemple d'une table de profil pour une information relative à une « Alerte radar ».

**Exemple 2** : **Table de profil pour l'information « Alerte radar »**

| L1 | Nature de l'information | Alerte radar | | |
|----|------------------------|--------------|---|---|
| L2 | Source du message | Logiciel Avertisseur radar | | |
| L3 | Message délivré | «Radar de vitesse à X km, vitesse limite Y km/h » | | |
| L4 | Variable pertinente | Distance D du radar | | |
| L5 | Unité de la variable pertinente | Mètre | | |
| L6 | Seuils de la variable pertinente | D <= 300 m | 300 m < D<= 1000 m | 1000 m < D <= 2000 m |
| L7 | Niveaux Importance I | 10 | 5 | 3 |
| L8 | Média utilisé | Affiche écran complet et message vocal | Affichage écran d'alerte et bip sonore | Affichage écran d'alerte et vitesse à respecter |

(suite)

| | | | | |
|---|---|---|---|---|
| L9 | Message visuel à afficher | « Radar de vitesse à X km, vitesse limite Y km/h » | « Radar de vitesse à X km, vitesse limite Y km/h » | « Radar de vitesse à X km, vitesse limite Y km/h » |
| L10 | Message sonore à émettre | «Radar à 300m » | «Radar à 1 km » | «Radar de vitesse à 2 km, vitesse limite Y km/h » |
| L11 | Durée d'affichage minimum si interruption | Attente dépassement radar | 5 sec | 5 sec |
| L12 | Durée d'affichage maximum | | 10 sec | 10 sec |
| L13 | Action suite à un simple touché écran | Retour à l'écran par défaut | Retour à l'écran par défaut | Retour à l'écran par défaut |
| L14 | Action suite à un glissé du doigt horizontal | Retour à l'écran par défaut | Retour à l'écran par défaut | Retour à l'écran par défaut |
| L15 | Action suite à un glissé du doigt vertical | Retour à l'écran par défaut | Retour à l'écran par défaut | Retour à l'écran par défaut |
| L16 | Acquittement / actions possible par reconnaissance vocale | Acquittement : « OK », « OK radar » | Acquittement : « OK », « OK radar » | Acquittement : « OK », « OK radar » |

On constate sur cette table de profil que la variable pertinente V est dans cet exemple la distance D à laquelle le véhicule se trouve du radar. On constate également qu'il existe, dans cette table de profil, trois niveaux de seuil représentant des distances du radar comprises entre 1000 et 2000 m, comprises entre 300 et 1000 m, et inférieures à 300m pour lesquelles les niveaux d'importance respectifs I sont I=3, I=5, et I=10.

On a représenté ci-après un troisième exemple d'une table de profil pour une information relative à la « Navigation GPS».

**Exemple 3 : Table de profil pour une information de « Navigation GPS»**

| | | | | |
|---|---|---|---|---|
| L1 | Nature de l'information | Instruction de Navigation GPS | | |
| L2 | Source du message | Logiciel de Navigation | | |
| L3 | Message délivré | « Tournez à gauche/droite dans X mètres » | | |
| L4 | Variable pertinente | Distance d restant à parcourir entre le véhicule et le virage à effectuer | | |
| L5 | Unité de la variable pertinente | Mètres | | |
| L6 | Seuils de la variable pertinente | d <= 25 m | 25 m < d < = 100 m | 100 m < d <= 500 m |
| L7 | Niveaux Importance I | 8 | 4 | 1 |
| L8 | Media utilisé | Affiche écran complet et message sonore | Affichage écran et message sonore | Affichage écran : flèche |
| L9 | Message visuel à afficher | Carte plein écran du virage et position du véhicule | Géographie du virage et distance du virage | Flèche orientée et distance du virage |
| L10 | Message sonore à émettre | « Tournez dans la prochaine rue à gauche/ droite» | « Tournez à gauche/ droite dans 100m » | |

(suite)

| L11 | Durée d'affichage minimum si interruption | 5 sec | 5 sec | |
|---|---|---|---|---|
| L12 | Durée d'affichage maximum | | | |
| L13 | Action suite à un simple touché écran | Répétition message | Répétition message | Répétition message |
| L14 | Action suite à un glissé du doigt horizontal | Retour à l'écran par défaut | Retour à l'écran par défaut | Retour à l'écran par défaut |
| L15 | Action suite à un glissé du doigt vertical | Retour à l'écran par défaut | Retour à l'écran par défaut | Retour à l'écran par défaut |
| L16 | Acquittement / actions possible par reconnaissance vocale | | | |

On constate sur cette table de profil que la variable pertinente $\underline{V}$ est dans cet exemple la distance $\underline{d}$ restant à parcourir entre le véhicule et le virage à effectuer. On constate également qu'il existe, dans cette table de profil, trois niveaux de seuil représentant des distances $\underline{d}$ comprises entre 100 et 500 m, comprises entre 25 et 100 m, et inférieures à 25 m pour lesquelles les niveaux d'importance respectifs $\underline{I}$ sont I=3, I=4, et I=8.

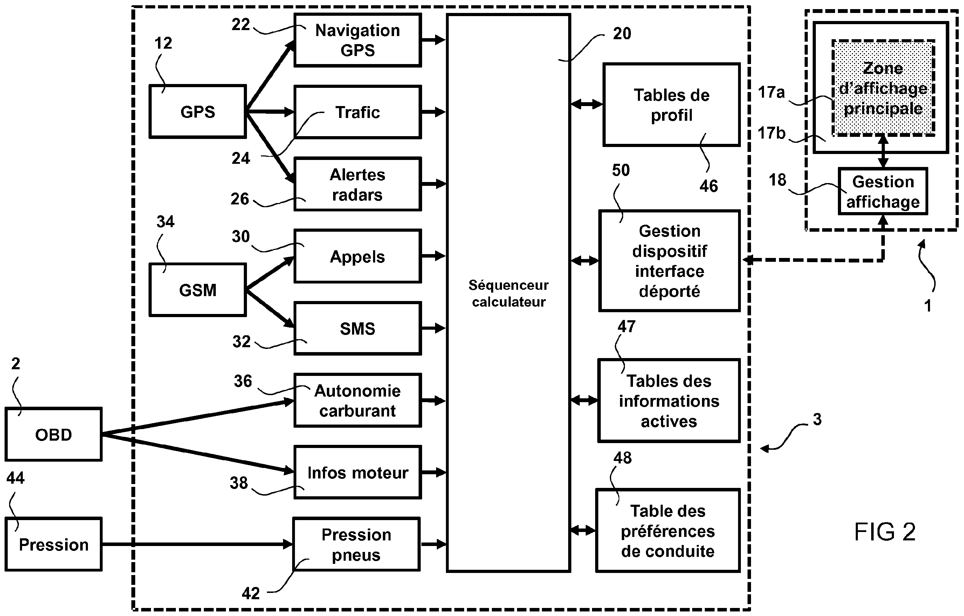

On a représenté sur la figure 2 un exemple d'architecture fonctionnelle mise en œuvre sous le contrôle du processeur 5 du smartphone 3. Cet exemple de mise en oeuvre fait appel à une architecture de type « requête/réponse » car le processeur 5 va séquentiellement interroger les différentes applications qui sont en mesure de fournir des informations et constituer une liste des informations actives. Dans ce mode de mise en oeuvre le smartphone 3 comprend essentiellement un séquenceur/ calculateur 20 qui reçoit des informations provenant d'une série d'applications qui sont alimentées par différents modules.

Ainsi, plus précisément, sur la figure 2 le séquenceur/calculateur 20 reçoit des informations des applications suivantes :

- Application « Navigation GPS » 22,
- Application « Trafic » 24 qui renvoie les informations relatives par exemple aux travaux routiers, aux accidents, ou aux embouteillages,
- Application « Alerte radar » 26 qui renvoie les informations relatives à la distance des radars.

Ces trois applications sont alimentées par le module GPS 12.

Il reçoit également des informations des applications :

- Application « Appels » 30 qui gère les appels vocaux reçus ou émis par le smartphone 3,
- Application « SMS » 32 qui gère les SMS reçus par le smartphone 3,

Ces deux applications sont alimentées par un module GSM 34.

Il reçoit également des informations des applications :

- Application « Autonomie carburant » 36 qui renvoie la quantité Q de carburant restant dans le réservoir du véhicule, cette information pouvant être transformée en distance $\underline{D}$ restant à parcourir avant la panne sèche par le calculateur du séquenceur/calculateur 20.
- Application « Informations moteur » 38 qui renvoie diverses informations sur le fonctionnement du moteur du véhicule, comme par exemple le régime moteur et les alertes moteurs.

Ces deux applications sont alimentées par le module OBD 2.

Il reçoit enfin des informations d'une application « Pression pneus » 42 alimentée par un module pression 44.

Le séquenceur/calculateur 20 est également en relation avec les tables de profil 46, avec la table des « Préférences de conduite » 48 et avec un module de gestion 50 du dispositif interface déporté 1.

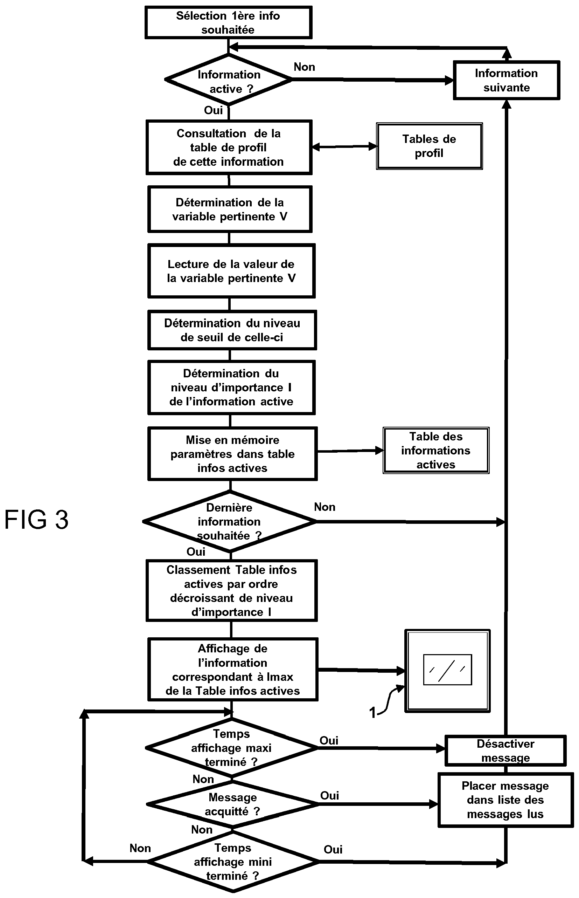

Dans ces conditions, et à titre d'exemple, le fonctionnement du système d'aide à la conduite selon l'invention s'établit ainsi que décrit ci-après et représenté sur l'ordinogramme de la figure 3.

Le séquenceur/calculateur 20 du smartphone 3 sélectionne la première information souhaitée dont il dispose dans la table des « Préférences de conduite » 48 qui est stockée dans sa mémoire 7 et vérifie si celle-ci est active, c'est-à-dire si sa valeur a évolué depuis la requête précédente. Si tel n'est pas le cas, cette information souhaitée n'est pas active et le séquenceur/calculateur 20 passe alors à l'information souhaitée suivante.

Lorsqu'il détecte une information active le séquenceur/calculateur 20 consulte la table de profil relative à cette information en cours, de façon à trouver dans celle-ci quelle est la variable pertinente V qu'il doit prendre en compte. Ainsi, et à titre d'exemple, si l'information en cours est l'information « Alerte radar » le séquenceur/calculateur 20 consulte la table de profil « Alerte radar » et trouve dans celle-ci que la variable pertinente V est la distance D qui sépare le véhicule du radar. Il relève ensuite la valeur instantanée de cette variable pertinente V qui lui est fournie (cf figure 2) par l'application correspondante, soit l'application « Alerte radar » 26 dans le présent exemple, qui est en relation avec le module correspondant, soit ici le module GPS 28.

Puis le séquenceur/calculateur 20 détermine quel est le niveau de seuil de la variable pertinente V et, en fonction de ce dernier, il détermine, à partir de la table de profil, le niveau d'importance I de cette information et complète une table dite « Table des informations actives » 47, qui est déjà existante, avec ce niveau d'importance I ainsi qu'avec les différents autres paramètres qui sont contenus dans la table de profil.

Puis le séquenceur/calculateur 20 passe à l'information suivante avec laquelle il procède de même.

Lorsque le séquenceur/calculateur 20 a terminé de balayer séquentiellement toutes les informations qui sont actives à cet instant, il classe la table des informations actives 47 par ordre décroissant de niveau d'importance I.

Puis, en commençant par l'information dont le niveau d'importance I est le plus élevé, il exécute les instructions qui sont contenues dans la table de profil 46 relative à cette information, ce qui lui permet de définir quel est le média à utiliser (Cf ligne 8 de la table de profil) pour porter à l'attention du conducteur la valeur de la variable pertinente V considérée, et sous quelle forme celle-ci doit être délivrée (Cf ligne 9 de la table de profil), puis il exécute l'affichage sur le dispositif interface déporté 1, via son module de gestion 50 qui entre en relation avec un module de « Gestion affichage » 18 du dispositif interface déporté 1. Si la table de profil indique (ligne 8) que le message doit être sonore, le processeur 15 du dispositif interface déporté 1 commande alors la diffusion d'un tel message sur son propre haut-parleur 14 et/ou sur le haut-parleur 25 du smartphone 3.

Si la table de profil relative à cette information indique que le message doit être affiché, le processeur commande cet affichage qui s'effectue alors dans la zone d'affichage principale 17a du dispositif interface déporté 1.

La table de profil relative à cette information en cours indique également au système la durée d'affichage maximale (Cf ligne 12) et, lorsque cette durée est terminée, le processeur 5 du smartphone 3 commande la désactivation de ce message et le système reprend la main pour un nouveau message.

Cependant, si la durée maximale n'est pas atteinte et que la table de profil indique que le message doit être acquitté par le conducteur, et si celui-ci a effectué un tel acquittement, notamment par un touché sur la zone d'affichage principale 17a qui est une zone tactile, le système place le message délivré dans une liste des messages lus puis il désactive ce message afin d'éviter qu'il ne soit affiché de nouveau puis il retourne au début du processus.

Bien entendu, si un conducteur modifie son comportement suite à une information (par exemple en diminuant sa vitesse suite à une notification de survitesse) il agit par voie de conséquence sur la valeur de la variable pertinente V (en l'espèce la vitesse du véhicule) ce qui a pour effet de faire disparaître ladite notification de survitesse, réalisant ainsi l'équivalent d'un acquittement.

On notera que, dans une variante de l'invention, cet acquittement peut également s'effectuer sans nécessiter une manipulation du dispositif interface déporté 1. En effet un tel acquittement peut être réalisé en utilisant le microphone 21 intégré au smartphone 3 et un module de reconnaissance vocale résidant dans ce dernier afin d'acquitter vocalement les messages délivrés par de dispositif interface déporté 1. Pour ce faire le module de « Gestion affichage » 18 utilise la communication bidirectionnelle établie entre le smartphone 3 et le dispositif interface déporté 1 via leurs modules de communication courte distance respectifs 9 et 19 pour :

1) afficher un message sur l'écran 17 du dispositif interface déporté 1,
2) activer un module de reconnaissance vocale stocké dans la mémoire 7 du smartphone 3,
3) activer l'écoute du conducteur via le microphone 21 du smartphone 3 pour reconnaître les locutions permettant l'acquittement du message qui sont contenues dans les tables de profil,
4) acquitter le message en cours et supprimer son affichage du dispositif interface déporté 1.

Les locutions qui seront utilisées pour acquitter le message en cours seront fournies, ainsi qu'expliqué précédemment, en ligne 16 de la table de profil relative à l'information considérée. Ainsi par exemple, dans le mode de mise en œuvre relatif à l'information « autonomie carburant », la ligne 16 de la table de profil indique qu'il est possible d'acquitter un message de ce type avec l'une des locutions suivantes : « OK », « OK autonomie », « OK carburant » et « OK navigation carburant » pour un acquittement effectué lorsque le véhicule se trouve entre 100 et 300 km d'une station-service.

Si le message n'a pas été acquitté alors que la table de profil indique qu'il aurait dû l'être, et si la période d'affichage minimal n'est pas écoulée le processeur renvoie au début de la séquence d'affichage.

On décrira ci-après un autre mode de mise en œuvre de la présente invention dans laquelle l'homme du métier reconnaîtra que l'architecture proposée convient bien aux applications qui peuvent échanger des messages entre elles par un mécanisme dit « API » pour « Application Program Interface ». Une telle architecture permet à chaque application génératrice d'information d'envoyer des messages prédéfinis à l'application de gestion du système d'aide à la conduite qui « empile » ces informations au fur et à mesure de leur arrivée. Il est ensuite du ressort de l'application de gestion de « dépiler » et traiter ces messages.

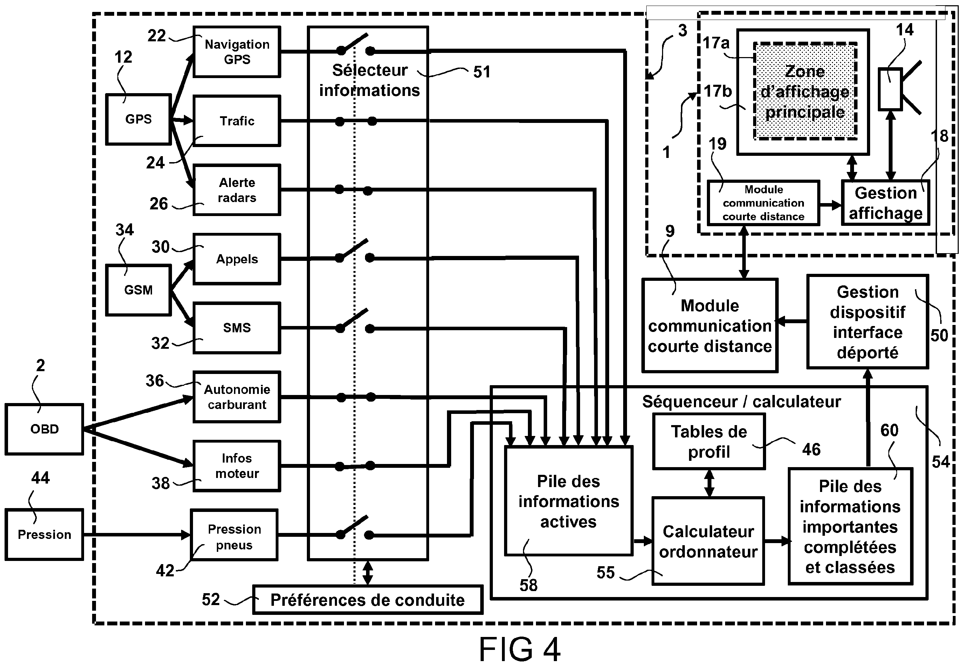

Suivant cet exemple d'un second mode de mise en œuvre de l'invention, et ainsi que représenté sur la figure 4, le smartphone 3 comporte un sélecteur d'informations 51 qui, comme précédemment, reçoit des informations d'une série d'applications alimentées par des modules appropriés. On gardera les mêmes références que celles adoptées dans l'exemple précédent.

Le sélecteur d'informations 51 est commandé par un module dit « Préférences de conduite » 52 qui permet au conducteur de sélectionner, par exemple avant un trajet, celles des informations dont il souhaite disposer au cours de celui-ci, précédemment dénommées « informations souhaitées ». Cette sélection pourra se faire, par exemple, de façon individuelle en validant les informations souhaitées ou en invalidant les informations non souhaitées ou, de façon globale, en sélectionnant un modèle prédéfini. Par exemple, sur la figure 4, sur laquelle on a schématisé le non souhait d'une information par la représentation d'un interrupteur ouvert, on constate que le conducteur a renoncé à recevoir les informations « Navigation GPS », « Appels », « SMS » et « Pression pneus ».

La sortie du sélecteur d'informations 51 arrive dans un séquenceur-calculateur 54 qui comprend un calculateur/ordonnateur 55 apte à se connecter avec les tables de profil 46 de même type que celles décrites précédemment, avec une « Pile des informations actives » 58 et avec une « Pile des informations importantes classées et complétées » 60. Cette dernière est en communication avec le module 50 de gestion du dispositif interface déporté 1 qui, lui-même, via le module de communication à courte distance 9, transfère les informations au dispositif interface déporté 1.

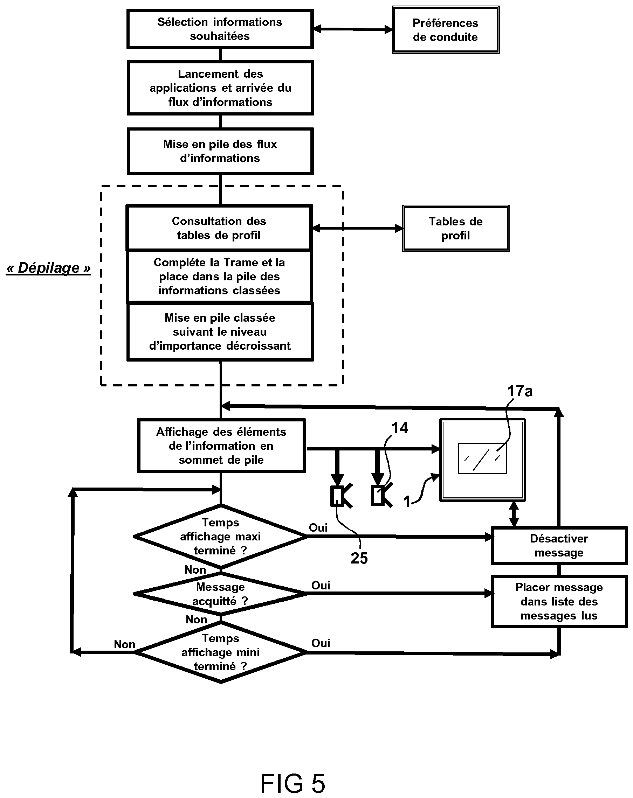

Dans ces conditions, et ainsi que représenté sur la figure 5, le fonctionnement s'établit ainsi que décrit ci-après.

Après que le conducteur ait précisé, via le module « Préférences de conduite » 52, les informations souhaitées dont il souhaite disposer et que le véhicule se trouve en cours de trajet, les informations arrivent en flux à partir des applications « Trafic » 24, « Alerte radars » 26, « Autonomie carburant » 36 et « Infos moteurs » 38 au séquenceur-calculateur 54 et vont s'empiler dans leur ordre d'arrivée dans la pile des informations actives 58. Ensuite, le séquenceur-calculateur 54 « dépile » selon l'ordre d'arrivée des informations, c'est-à-dire une gestion de type dit « FIFO » (First In First Out), c'est-à-dire premier arrivé premier traité, les éléments de cette « pile des informations actives » 58 et consulte la table de profil 56 pour chacune des informations de la pile, ce qui lui permet de déterminer la variable pertinente V puis la valeur du niveau d'importance $\underline{I}$ de cette dernière. Puis le calculateur/ordonnateur 55 alimente la pile 60 dite « Pile des informations importantes complétées et classées » dans laquelle d'une part la trame de chaque information est complétée par les autres paramètres contenus dans la table de profil propre à chaque information et d'autre part est classée par ordre de valeur décroissante du niveau d'importance $\underline{I}$.

Puis le séquenceur-calculateur 54 extrait de la pile des informations importantes complétées et classées 60 chaque trame d'information classée à partir « du haut » de la pile, autrement dit en prenant l'information dont le niveau d'importance $\underline{I}$ est le plus élevé, et transmet cette trame au module 50 de « Gestion du dispositif interface déporté » 1. Ce dernier, via les modules de communication à courte distance respectifs 9 et 19 du smartphone 3 et du dispositif interface déporté 1, transmet cette trame au module de « Gestion affichage » 18 du dispositif interface déporté 1 qui adresse à sa dalle d'affichage 17 les informations à afficher dans sa zone d'affichage principale 17a et aux haut-parleurs 25 et/ou 14 les annonces à énoncer.

La gestion des acquittements des messages et des temps d'affichage se fait ainsi que dans l'exemple précédent illustré sur la figure 3.

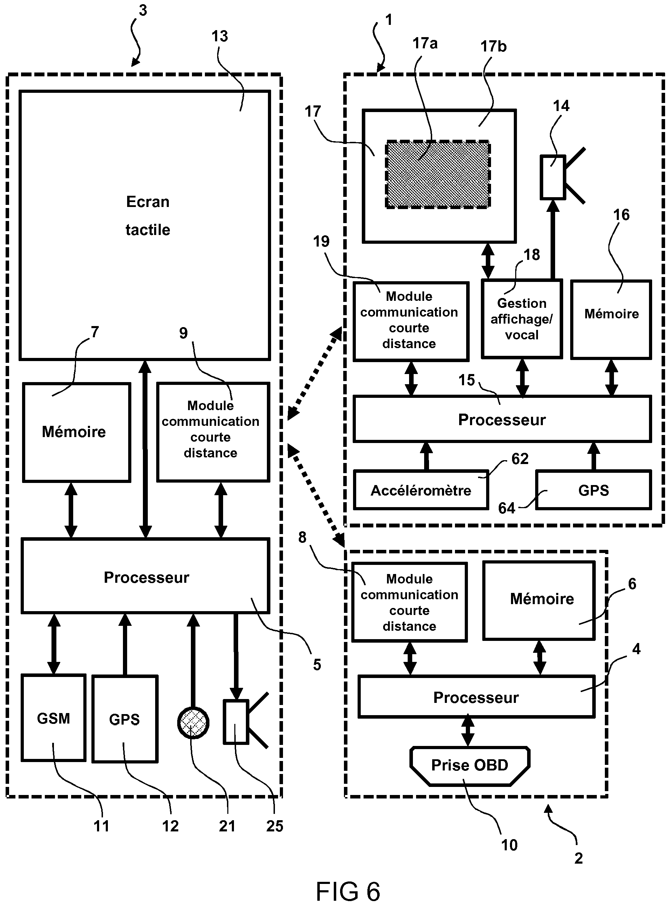

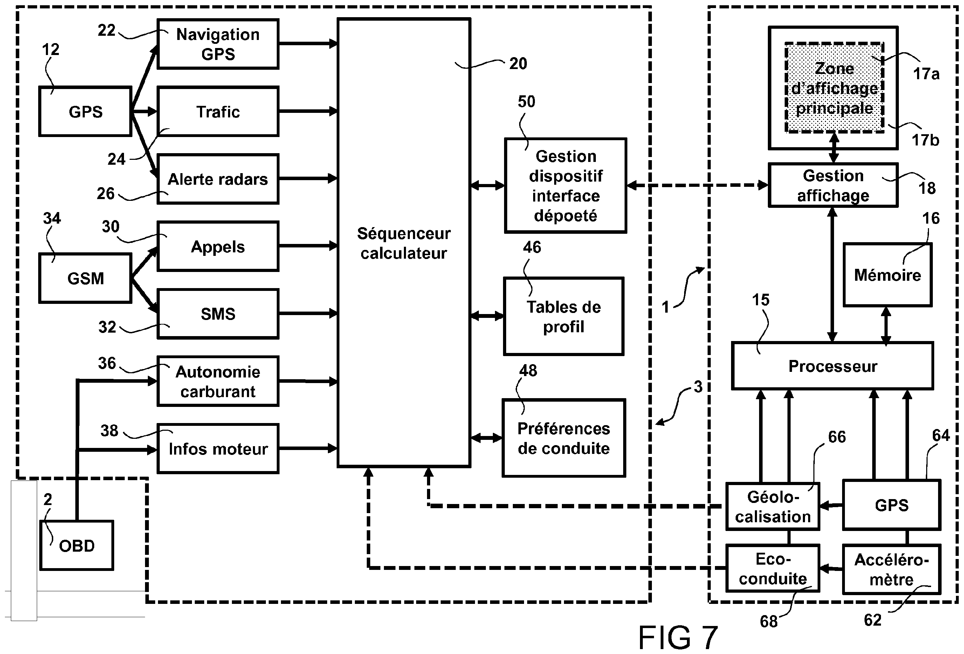

On a représenté sur les figures 6 et 7 une variante de mise en œuvre de la présente invention qui est particulièrement intéressante dans la mesure où elle permet un fonctionnement de celle-ci dans un mode « simplifié », dans le cas où, de façon temporaire, la connexion du dispositif interface déporté 1 avec le smartphone 3 ne pourrait être établie et ce pour des raisons diverses telles que par exemple le cas où le module Bluetooth du smartphone 3 serait non actif, ou l'appairage entre le dispositif interface déporté 1 et le smartphone 3 ne serait pas réalisé, ou dans le cas où l'application de gestion du système suivant l'invention ne serait pas lancée sur le smartphone 3.

Pour ce faire, on a doté le dispositif interface déporté 1 tel que décrit précédemment en regard de la figure 1 d'un accéléromètre 62 et d'un module GPS 64. Dans ces conditions le processeur 15 du dispositif interface déporté 1 détecte ce défaut de connexion avec le smartphone 3 et sauvegarde dans la mémoire 16 qui lui est associée les données de localisation qui lui sont fournies par son module GPS 64 ainsi que les données relatives à la conduite qui lui sont fournies par l'accéléromètre 62.

On comprend que, dans de telles conditions, une gestion normale de la zone d'affichage principale 17a ne peut plus être assurée, et le processeur 15 commande alors le passage dans un mode « simplifié » dans lequel il reçoit et traite directement les informations en provenance de l'accéléromètre 62 et du module GPS 64 tout en pilotant la dalle d'affichage 17 pour afficher, par exemple, la vitesse du véhicule issue du module GPS 64, des alertes de dépassement de seuils d'accélération ou de freinage issues de l'accéléromètre 62 ou des informations de limites de vitesse, informations combinant les données du module GPS 64 et des données cartographique stockées dans la mémoire 16. A cet effet, et ainsi que représenté sur la figure 7, le dispositif interface déporté 1 peut être couplé avec une application de géolocalisation 66, et l'accéléromètre 62 peut être couplé avec une application d'éco-conduite 68, c'est-à-dire une application qui évalue la souplesse de conduite en mesurant les accélérations et décélérations du véhicule pour chaque trajet. Le processeur 15 peut ainsi accéder directement aux données brutes issues du module GPS 64 et de l'accéléromètre 62 ainsi qu'aux données traitées par leurs applications correspondantes de géolocalisation 66 et d'éco-conduite 68.

Par la suite, lorsque la communication entre le smartphone 3 et le dispositif interface déporté 1 se trouvera rétablie via les modules de communication courte distance 19 et 9, les applications de géolocalisation 66 et d'éco-conduite 68 pourront participer à alimenter le séquenceur calculateur 20 du smartphone 3 au même titre que les autres applications précédemment mentionnées, à savoir les applications allant de l'application navigation 22 à l'application infos moteur 38.

Toujours à titre d'exemple, et suite au passage dans un mode dit « simplifié » dans lequel le processeur 15 traite directement les informations en provenance du module GPS 64, on pourrait également suivant l'invention afficher tout type d'informations géolocalisées, contenues dans la mémoire 16 du dispositif interface déporté 1, comme par exemple une base de données de points d'intérêts (dite POI) contenant la localisation de stations-services ou la localisation de radars de vitesse ou bien des informations relatives aux segments de route parcourus comme par exemple les limitations de vitesse ou la présence de zones dangereuses. Dans ce dernier cas de figure, le processeur 15 du dispositif interface déporté 1 est en outre en mesure d'assurer la gestion de la comparaison entre la localisation actuelle du véhicule et celle relative aux limites de vitesses ou aux zones de danger afin d'émettre une alerte de survitesse ou de danger à l'attention du conducteur.

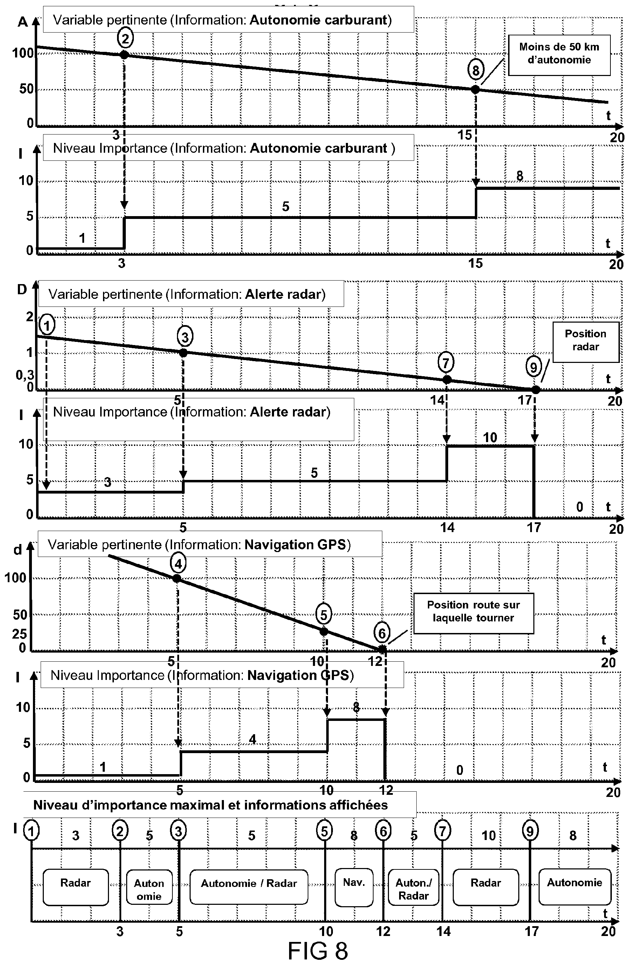

On a représenté à titre d'exemple sur la figure 8 un schéma de fonctionnement du système selon l'invention au cours de l'évolution dans le temps de trois informations, à savoir : Autonomie carburant, Alerte radar et Navigation GPS.

On a représenté pour chacune de ces trois informations la variation au cours d'une durée, qui varie par exemple de 0 à 20 minutes, de leur variable pertinente $\underline{V}$ ainsi que de leur niveau d'importance $\underline{I}$.

Le schéma en bas de page représente le niveau d'importance maximal des trois informations précitées ainsi que le message affiché par le dispositif interface déporté 1 au cours du déplacement du véhicule durant la période de temps mentionnée.

Au départ du présent exemple, au temps 0 (repère 1), le véhicule équipé du système d'aide à la conduite suivant l'invention se trouve dans une zone située entre 1 et 2 kilomètres d'un radar. Selon la table de profil de l'information « Alerte radar » donnée précédemment à l'exemple 2, on constate que la variable pertinente $\underline{V}$ est la distance $\underline{D}$ qui sépare le véhicule du radar et que le niveau d'importance $\underline{I}$ de cette information pour une distance $\underline{D}$ du radar : 100 m < D <= 2000 m est égal à 3. On a donc I=3. En raisonnant de même pour les deux autres informations on constate que :

- Pour l'information « Autonomie de carburant » la variable pertinente $\underline{V}$ est l'autonomie $\underline{A}$ du véhicule qui est supérieure à 100 km, ce qui nous donne dans la table de profil de l'exemple 2 un niveau d'importance I=1,
- Pour l'information « Navigation GPS » la variable pertinente $\underline{V}$ est la distance $\underline{d}$ séparant le véhicule d'un virage qui est supérieure à 100 m, ce qui nous donne dans la table de profil de l'exemple 3 un niveau d'importance I=1,

C'est donc le niveau d'importance de l'information « Alerte radar » qui est le plus élevé et c'est donc l'information « Alerte radar » qui est affichée par le dispositif interface déporté 1.

A l'instant 3 (repère 2), le véhicule dispose d'une autonomie de carburant A inférieure à 100 km, si bien que le niveau d'importance de l'information « Autonomie carburant » devient I=5. Comme par ailleurs le véhicule se trouve toujours à plus de 100 m du prochain virage à effectuer, selon le logiciel de navigation, le niveau d'importance de l'information « Navigation GPS » reste I=1. Enfin, le véhicule se trouve toujours à plus de 1000 m du radar et le niveau d'importance de l'information « Alerte radar » reste à sa valeur de I=3. C'est donc maintenant l'information « Autonomie carburant » $\underline{A}$ dont le niveau d'importance $\underline{I}$ est le plus élevé et c'est cette dernière information dont le message est affiché par le dispositif interface déporté 1.

A l'instant 5 (repère 3) le véhicule se trouve alors à moins de 1000 m du radar, si bien que le niveau d'importance de l'information « Alerte radar » devient I=5. Comme par ailleurs il se trouve à moins de 100 m du prochain virage à effectuer (repère 4), selon le logiciel de navigation le niveau d'importance de l'information « Navigation GPS » devient alors I=4. Enfin l'autonomie du véhicule est toujours entre 50 et 100 km, si bien que le niveau d'importance de l'information « Autonomie carburant » reste I=5. Dans cette situation les informations « Alerte radar » et « Autonomie carburant » ont des niveaux d'importance $\underline{I}$ égaux. Dans ces conditions, et ainsi que précisé sur les tables de profils respectives de ces deux informations, leurs durées d'affichage minimales sont de 10 secondes, si bien que, ainsi que montré sur les ordinogrammes des figures 3 et 5, le gestionnaire d'affichage du dispositif va alterner toutes les 10 secondes entre l'affichage de l'information « Autonomie carburant » et l'information « Alerte radar » tant que ces deux informations ne seront pas acquittées par le conducteur.

Un tel acquittement pourra se faire par le conducteur en touchant par exemple la zone d'affichage principale 17a de la dalle d'affichage 17 lorsque celle-ci affiche l'une de ces deux informations, l'affichage de l'autre information continuant jusqu'à son acquittement ou jusqu'au dépassement de son temps d'affichage maximal. L'acquittement pourra également se faire de façon vocale ainsi que mentionné précédemment.

A l'instant 10 (repère 5), le véhicule se trouve à moins de 25 m du virage à effectuer selon son logiciel de navigation, le niveau d'importance de l'information « Navigation GPS » devient I=8. Par ailleurs l'autonomie du véhicule est encore supérieure à 50 km si bien que le niveau d'importance de l'information « Autonomie carburant » conserve sa valeur de I=5. D'autre part le véhicule se trouve à plus de 300 m du radar si bien que le niveau d'importance de l'information « Alerte radar » conserve sa valeur de I=5. C'est donc le niveau d'importance de l'information « Navigation GPS » qui est le plus élevé I=8 et c'est le message relatif à cette dernière information qui sera affiché et/ou énoncé. Par exemple : « Tournez à droite dans la prochaine rue ». Ce message restera seul affiché tant que le logiciel de navigation n'aura pas informé le système que le conducteur a terminé ledit virage. Une fois ceci fait, à l'instant 12 (repère 6), le niveau d'importance de l'information « Navigation GPS » tombe à I=0 et le système affiche, de nouveau, par alternance les informations « Autonomie carburant » et « Alerte radar » car ces deux informations ont le même niveau d'importance I=5.

A l'instant 14 (repère 7), le véhicule entre dans la zone des 300 m du radar, si bien que le niveau d'importance de l'information « Alerte radar » passe à I=10, et devient alors prioritaire jusqu'à ce que le radar soit dépassé et c'est le message relatif à cette information qui sera affiché et/ou énoncé.

Une fois le radar dépassé, à l'instant 17 (repère 9), le niveau d'importance de l'information « Alerte radar » retombe à I=0 si bien que c'est de nouveau l'information « Autonomie carburant » dont le niveau d'importance est le plus élevé qui devient alors prioritaire. Et le message pour ce niveau d'importance sera impératif et à la fois visuel et sonore « Alerte carburant - Autonomie inférieure à 50 Km » incitant le conducteur à faire le plein de carburant avant que son réservoir ne soit vide.

Bien que pour illustrer le présent exemple on ait fait appel à la gestion de seulement trois informations, le système suivant l'invention peut bien entendu gérer une multitude d'informations provenant de sources très diverses (données du véhicule, logiciels embarqués, prise OBD, capteurs divers, applications smartphone etc...) de manière automatique à l'aide des moyens cités et des paramètres contenus dans les tables de profil.

La présente invention est particulièrement intéressante en ce qu'elle permet de délivrer au conducteur les informations hiérarchisées en un endroit unique situé préférentiellement au centre d'un afficheur, à savoir dans la zone d'affichage principale 17a, ce qui d'une part permet au conducteur de ne pas avoir à rechercher les informations sur un écran à la surface duquel elles sont habituellement dispersées, ainsi qu'il en est dans les dispositifs suivant l'état antérieur de la technique, et d'autre part permet un affichage plus visible détectable par le conducteur d'un simple coup d'oeil.

De plus, grâce à l'utilisation d'une durée d'affichage minimale pour chaque information, la présente invention laisse le temps au conducteur de prendre en compte une information avant qu'elle ne soit interrompue par une nouvelle information.

Ces divers avantages procurés par l'invention contribuent à la sécurité du conducteur dans la mesure où ils diminuent de façon importante le temps d'attention qui est nécessaire à celui-ci pour prendre connaissance des informations qui lui sont communiquées par le système.

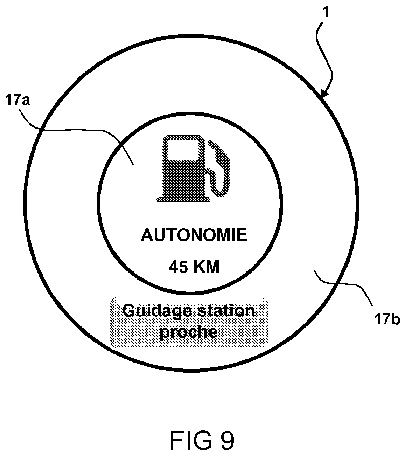

Une telle caractéristique de notre œil est mise à contribution selon l'invention pour réduire le temps de prise en compte de chaque message et, de ce fait, réduire d'autant l'attention du conducteur sur le dispositif interface déporté ce qui lui permet de se concentrer en priorité sur sa conduite. Ainsi, suivant l'invention la zone d'affichage séquentiel ou zone d'affichage principale 17a sera préférentiellement circulaire et disposée au centre d'une dalle d'affichage 17 de forme également circulaire ainsi que représenté sur la figure 9. En effet les études relatives à l'ergonomie des interfaces hommes-machines montrent que l'attention se focalise beaucoup plus rapidement et facilement sur une information située au centre d'une zone d'affichage circulaire par rapport à une même information affichée sur un écran rectangulaire.

Dans un tel mode de mise en œuvre de l'invention on pourra utiliser la zone annulaire ou zone d'affichage secondaire 17b entourant la zone d'affichage principale 17a pour afficher des informations annexes qui ne sont pas délivrées sous forme hiérarchisée, telles que par exemple, les informations relatives à l'état de la batterie, au niveau de qualité de conduite ou toute autre information ne disposant pas de notion d'urgence de prise en compte en temps réel.

Suivant l'invention on pourra également placer dans ces zones 17a ou 17b un bouton virtuel, ou « bouton action », permettant d'acquitter une information affichée ou bien déclencher un processus en un seul touché du doigt.

Ainsi, dans l'exemple illustré sur la figure 8 par exemple, entre le repère 3 et le repère 5, on pourra acquitter par un touché du doigt sur la zone d'affichage principale 17a l'information « Autonomie carburant » de façon que seule l'information « Alerte radar » reste visible.

De même, dans l'exemple de la figure 8, au repère 9, on pourra, ainsi que représenté sur la figure 9, afficher dans la zone d'affichage secondaire 17b un « bouton action virtuel » intitulé par exemple « Guidage station proche » qui, lorsqu'il sera touché par le conducteur, assurera le guidage du véhicule vers une station-service.

Bien que dans les exemples décrits dans le présent texte le sélecteur d'informations 51, le séquenceur-calculateur 54, ainsi que la pile des informations actives 58 et la pile des informations importantes classées et complétées 60 soient intégrés au smartphone 3, on pourrait, sans sortir du cadre de la présente invention, intégrer ces différents éléments en totalité ou en partie au dispositif interface déporté 1.

On pourra avantageusement intégrer le module «Préférences de conduite» 52, au dispositif interface déporté 1, de façon à proposer au conducteur, par exemple avant chaque trajet, un choix d'un mode d'assistance, et ceci même si la connexion du dispositif interface déporté 1 avec le smartphone 3 n'est pas établie.

Suivant l'invention le dispositif interface déporté 1 pourra ne pas posséder de haut-parleur ou on préférera utiliser le haut-parleur 25 du smartphone 3 puisque désormais tous les smartphones en disposent. Le passage du message à délivrer se fera alors via les modules de communication courte distance respectifs 9 et 19 du dispositif interface déporté 1 et du smartphone 3.

De même, la plupart des véhicules disposent désormais de haut-parleurs et de microphones de qualité reliés à un système dit de « téléphone main libre » permettant à son utilisateur de passer et recevoir des appels téléphoniques via son téléphone, relié par communication vocale Bluetooth, sans qu'il ait besoin de le manipuler. Suivant l'invention on fera appel à cette fonctionnalité pour d'une part énoncer les messages vocaux du système via les haut-parleurs du véhicule et d'autre part pour envoyer au système, via le microphone du véhicule, les locutions permettant de réaliser l'opération d'acquittement des messages reçus.

Pour ce faire, le téléphone étant déjà appairé avec le system main-libre du véhicule par le biais d'une connexion Bluetooth voix de type A2DP permettant le transfert de la voix de manière bidirectionnelle entre le smartphone et le téléphone main-libre du véhicule, le dispositif interface déporté 1, peux énoncer les messages sonores sur les haut-parleurs du système main-libre du véhicule en établissant, via le smartphone 3, une connexion Bluetooth avec celui-ci.

Un acquittement des messages délivrés par le système par reconnaissance vocale comme présenté précédemment est aussi possible en utilisant le microphone du système main libre du véhicule par le biais de la connexion vocale établie avec le smartphone 3.

Enfin, suivant l'invention, le smartphone 3 et le dispositif interface déporté 1 peuvent bien entendu être alimentés par leurs propres batteries individuelles, mais encore par la batterie du véhicule, notamment via la prise allume-cigare, et la liaison entre le smartphone et le dispositif interface déporté peut être assurée non seulement par une liaison Bluetooth mais également par une liaison filaire de type USB.

A titre d'exemple, on pourrait également suivant l'invention afficher la localisation du véhicule sur une carte couvrant la totalité de la dalle d'affichage 17 en arrière-plan dans la zone d'affichage secondaire 17b de celle-ci, tout en permettant au système d'afficher les informations hiérarchisées.

Egalement à titre d'exemple, on pourrait afficher en permanence dans la zone d'affichage secondaire 17b une jauge représentative de la qualité de conduite en temps réel à partir des informations en provenance de l'application d'éco-conduite 68 tout en laissant le système suivant l'invention afficher dans la zone d'affichage principale 17a les informations hiérarchisées.

Dans un mode de mise en œuvre de l'invention le processeur 15 du dispositif interface déporté 1 gérera un programme permettant à ce dernier de détecter dans le véhicule les téléphones disposant de communication Bluetooth autres que celle du smartphone 3 du conducteur qui, suivant l'invention a déjà été associé au dispositif interface déporté 1 lors d'une procédure dite « Appairage Bluetooth ». Le programme ayant détecté dans le véhicule d'autres téléphones ou smartphones aptes à une communication Bluetooth pourra demander à chacun de ses utilisateurs s'il souhaite que leur téléphone ou smartphone soit appairé avec le dispositif interface déporté 1. Ainsi lorsque tel sera le cas, le dispositif interface déporté sera en mesure par la suite de reconnaître dès qu'il se trouvera dans le véhicule le téléphone ou le smartphone appairé et en conséquence l'utilisateur de celui-ci.

Dans le cas où, par la suite, le système détectera dans le véhicule plusieurs smartphones qui sont appairés avec son dispositif interface déporté 1, ce dernier pourra demander au conducteur de confirmer son identité ce qui lui permettra de mettre à sa disposition des données de trajets et toute autre donnée de conduite préalablement enregistrée et notamment les préférences de conduite propres à chacun des conducteurs potentiels du véhicule mentionnées précédemment.

Ce mode de mise en œuvre de l'invention est tout particulièrement intéressant en ce qu'il permet à chacun des conducteurs possibles ou potentiels du véhicule d'utiliser le même système d'aide à la conduite suivant l'invention en bénéficiant de toute l'aide personnalisée que ce dernier est apte à lui fournir.

## Revendications

1. Système d'aide à la conduite d'un véhicule, comprenant un smartphone (3) et un dispositif interface déporté (1) qui sont connectables entre eux et qui possèdent des moyens (14,17) aptes à délivrer un message sous forme visuelle et/ou sonore, dans lequel le dispositif interface déporté (1) comporte des moyens aptes à recevoir du smartphone (3) des informations à prendre en compte, **caractérisé en ce que** le smartphone (3) ou le dispositif interface déporté (1) comporte des moyens aptes à hiérarchiser ces informations à prendre en compte, suivant un ordre de priorité qui est fonction de la valeur d'un niveau d'importance (I) attribué à chacune des informations à prendre en compte, et le dispositif interface déporté (1) est apte à les délivrer de manière séquentielle sous forme de messages, selon ledit ordre de priorité.

**2.** Système d'aide à la conduite suivant la revendication 1 **caractérisé en ce que** ledit ordre de priorité est l'ordre décroissant du niveau d'importance (I) .

**3.** Système d'aide à la conduite suivant l'une quelconque des revendications 1 ou 2 **caractérisé en ce que** le dispositif interface déporté (1) comporte des moyens aptes à recevoir de sources externes (2, 44) génératrices d'informations, des informations à prendre en compte.

**4.** Système d'aide à la conduite suivant l'une quelconque des revendications précédentes **caractérisé en ce que** ledit ordre de priorité est défini dans une mémoire (16) du dispositif interface déporté (1) et/ou dans une application spécifique enregistrée dans une mémoire (7) du smartphone (3).

**5.** Système d'aide à la conduite suivant l'une quelconque des revendications précédentes, **caractérisé en ce que** le smartphone (3) et/ou le dispositif interface déporté (1) comporte des moyens sélecteurs d'informations (51) aptes à permettre la sélection, notamment avant le début d'un trajet, des informations à prendre en compte.

**6.** Système d'aide à la conduite suivant l'une quelconque des revendications précédentes, **caractérisé en ce que** le smartphone (3) ou le dispositif interface déporté (1) comporte des moyens séquenceurs (20) aptes à sélectionner successivement des informations émises par le smartphone (3) et/ou les sources externes (2,44) génératrices d'informations.

**7.** Système d'aide à la conduite suivant l'une quelconque des revendications précédentes, **caractérisé en ce que** le smartphone (3) et/ou le dispositif interface déporté (1) comporte des moyens aptes à déterminer, pour chaque information à prendre en compte, une variable pertinente (V).

**8.** Système d'aide à la conduite suivant la revendication 7 **caractérisé en ce que** le smartphone (3) et/ou le dispositif interface déporté (1) comporte des moyens aptes à attribuer le niveau d'importance (I) aux informations à prendre en compte en fonction de la valeur de leur variable pertinente (V) selon des critères prédéfinis.

**9.** Système d'aide à la conduite suivant la revendication 8 **caractérisé en ce que** lesdits critères sont prédéfinis dans une table de profil propre à chacune des informations à prendre en compte et contenant également la variable pertinente (V) et le niveau d'importance (I) respectivement associé à au moins un seuil de valeur de la variable pertinente (V).

**10.** Système d'aide à la conduite suivant l'une des revendications 7 à 9 **caractérisé en ce qu'**il comporte des moyens aptes à déterminer la valeur instantanée de la variable pertinente (V).

**11.** Système d'aide à la conduite suivant l'une des revendications 9 ou 10 **caractérisé en ce que** la table de profil (46) contient la nature et/ou la forme du message à délivrer.

**12.** Système d'aide à la conduite suivant l'une quelconque des revendications précédentes **caractérisé en ce que** le dispositif interface déporté (1) comporte des moyens aptes, en cas de non connexion temporaire avec le smartphone (3), à passer dans un mode dit simplifié et comporte au moins un accéléromètre (62) et/ou au moins un GPS (64).

**13.** Système d'aide à la conduite suivant l'une quelconque des revendications précédentes **caractérisé en ce que** le dispositif interface déporté (1) comporte des moyens d'affichage (17) aptes à délivrer les informations hiérarchisées dans une zone d'affichage principal (17a) préférentiellement disposée au centre des moyens d'affichage (17).

**14.** Système d'aide à la conduite suivant l'une quelconque des revendications précédentes **caractérisé en ce que** le dispositif interface déporté (1) comporte des moyens aptes, via un module de communication courte distance (19), notamment « Bluetooth », à détecter et recenser les différentes personnes présentes dans le véhicule, par une émission d'un module de communication courte distancce de leur smartphone.

**15.** Procédé d'aide à la conduite d'un véhicule, mettant en œuvre un système d'aide à la conduite comprenant un smartphone (3) et un dispositif interface déporté (1) qui sont connectables entre eux et qui possèdent des moyens (14,17,25) aptes à délivrer des messages sous forme visuelle et/ou sonore, **caractérisé en ce qu'**il comporte les étapes consistant à :

- sélectionner des informations à prendre en compte par le système,
- consulter, pour chacune de ces informations à prendre en compte, une table de profil (46) comprenant une variable pertinente (V) et un certain niveau d'importance (I),
- délivrer séquentiellement les messages sous une forme hiérarchisée, notamment par ordre décroissant de niveau d'importance(I) .

**16.** Procédé d'aide à la conduite suivant la revendication 15 **caractérisé en ce qu'**il comporte une étape consistant à balayer séquentiellement les informations à prendre en compte reçues, afin de déterminer, par référence à la table de profil associée à chaque information, le niveau d'importance (I) de la valeur instantanée de la variable pertinente (V) associée à cette information.

**17.** Procédé d'aide à la conduite suivant la revendication 15, **caractérisé en ce qu'**il comporte les étapes consistant à :

- mettre dans une pile les trames des informations prises en compte reçues successivement,
- consulter, pour chaque information de cette pile, la table de profil associée à cette information, de façon à compléter la trame de chaque information de la pile avec des éléments de la table de profil associée à cette information,
- classer la pile par ordre décroissant de niveau d'importance (I),
- délivrer séquentiellement les messages par ordre décroissant de niveau d'importance (I).

**Patentansprüche**

**1.** Fahrerassistenzsystem eines Fahrzeugs, umfassend ein Smartphone (3) und eine Fern-Schnittstellenvorrichtung (1), die aneinander anschließbar sind und die Mittel (14, 17) besitzen, die geeignet sind, eine Nachricht in visueller und / oder Audioform auszugeben, bei der die Fern-Schnittstellenvorrichtung (1) Mittel umfasst, die geeignet sind, von dem Smartphone (3) zu berücksichtigende Informationen zu empfangen, **dadurch gekennzeichnet, dass** das Smartphone (3) oder die Fern-Schnittstellenvorrichtung (1) Mittel umfasst, die geeignet sind, diese zu berücksichtigenden Informationen gemäß einer Prioritätsreihenfolge, die von dem Wert eines Bedeutungsniveaus (I) abhängt, das jeder dieser zu berücksichtigenden Informationen zugeordnet ist, nach dem Rang einzustufen, und die Fern-Schnittstellenvorrichtung (I) ist geeignet, sie sequentiell in Form von Nachrichten gemäß der genannten Prioritätsreihenfolge auszugeben.

**2.** Fahrerassistenzsystem gemäß Anspruch 1, **dadurch gekennzeichnet, dass** die genannte Prioritätsreihenfolge je nach Bedeutungsniveau (I) abnimmt.

**3.** Fahrerassistenzsystem gemäß irgendeinem der Ansprüche 1 oder 2, **dadurch gekennzeichnet, dass** die Fern-Schnittstellenvorrichtung (1) Mittel umfasst, die geeignet sind, Informationen zu empfangen, die von Informationen erzeugenden externen Quellen (2, 44) zu berücksichtigen sind.

**4.** Fahrerassistenzsystem gemäß irgendeinem der voranstehenden Ansprüche, **dadurch gekennzeichnet, dass** die genannte Priorirätsreihenfolge in einem Speicher (16) der Fern-Schnittstellenvorrichtung (1) und / oder in einer spezifischen Anwendung, die in einem Speicher (7) des Smartphones (3) gespeichert ist, definiert ist.

**5.** Fahrerassistenzsystem gemäß irgendeinem der voranstehenden Ansprüche, **dadurch gekennzeichnet, dass** das Smartphone (3) und / oder die Fern-Schnittstellenvorrichtung (1) Auswahlmittel von Informationen (51) umfasst, die geeignet sind, die Auswahl von zu berücksichtigenden Informationen, insbesondere vor dem Beginn einer Fahrt, zu ermöglichen.

**6.** Fahrerassistenzsystem gemäß irgendeinem der voranstehenden Informationen, **dadurch gekennzeichnet, dass** das Smartphone (3) oder die Fern-Schnittstellenvorrichtung (1) Sequenzierungsmittel (20) umfasst, die geeignet sind, nacheinander Informationen auszuwählen, die vom Smartphone (3) und / oder Informationen ausgebenden externen Quellen (2, 44) ausgegeben sind.

7. Fahrerassistenzsystem gemäß irgendeinem der voranstehenden Informationen, **dadurch gekennzeichnet, dass** das Smartphone (3) und / oder die Fern-Schnittstellenvorrichtung (1) Mittel umfasst, die geeignet sind, für jede zu berücksichtigende Information eine relevante Variable (V) zu bestimmen.

8. Fahrerassistenzsystem gemäß Anspruch 7, **dadurch gekennzeichnet, dass** das Smartphone (3) und / oder die Fern-Schnittstellenvorrichtung (1) Mittel umfasst, die geeignet sind, das Bedeutungsniveau (I) den zu berücksichtigenden Informationen in Abhängigkeit von dem Wert ihrer relevanten Variablen (V) gemäß vordefinierten Kriterien zuzuordnen.

9. Fahrerassistenzsystem gemäß Anspruch 8, **dadurch gekennzeichnet, dass** die genannten Kriterien in einer Profiltabelle vordefiniert sind, die jeder zu berücksichtigenden Information eigen sind und ebenfalls die relevante Variable (V) und das Bedeutungsniveau (I) umfasst, das jeweils wenigstens einer Wertschwelle der relevanten Variable (V) zugeordnet ist.

10. Fahrerassistenzsystem gemäß einem der Ansprüche 7 bis 9, **dadurch gekennzeichnet, dass** es Mittel umfasst, die geeignet sind, den sofortigen Wert der relevanten Variablen (V) zu bestimmen.

11. Fahrerassistenzsystem gemäß einem der Ansprüche 9 oder 10, **dadurch gekennzeichnet, dass** die Profiltabelle (46) die Art und / oder die Form der auszugebenden Nachricht enthält.

12. Fahrerassistenzsystem gemäß irgendeinem der voranstehenden Ansprüche, **dadurch gekennzeichnet, dass** die Fern-Schnittstellenvorrichtung (1) Mittel umfasst, die geeignet sind, bei vorübergehender Anschlussunterbrechung mit dem Smartphone (3) in einen so genannten vereinfachten Modus zu schalten, und wenigstens einen Beschleunigungsmesser (62) und / oder wenigstens ein GPS (64) umfasst.

13. Fahrerassistenzsystem gemäß irgendeinem der voranstehenden Ansprüche, **dadurch gekennzeichnet, dass** die Fern-Schnittstellenvorrichtung (1) Anzeigemittel (17) umfasst, die geeignet sind, die hierarchisierten Informationen in einer Hauptanzeigezone (17a) auszugeben, die bevorzugt im Zentrum der Anzeigemittel (17) angeordnet ist.

14. Fahrerassistenzsystem gemäß irgendeinem der voranstehenden Ansprüche, **dadurch gekennzeichnet, dass** die Fern-Schnittstellenvorrichtung (1) Mittel umfasst, die geeignet sind, über ein Kurzbereichs-Kommunikationsmittel (19), insbesondere "Bluetooth", die unterschiedlichen, in dem Fahrzeug anwesenden Personen, durch eine Ausgabe eines Kurzbereichs-Kommunikationsmoduls ihres Smartphones zu erkennen und zu erfassen.

15. Fahrerassistenzverfahren, das ein Fahrerassistenzsystem umsetzt, umfassend ein Smartphone (3) und eine Fern-Schnittstellenvorrichtung (1), die aneinander anschließbar sind und die Mittel (14, 17, 25) besitzen, die geeignet sind, Nachrichten in visueller und / oder Audio-Form auszugeben, **dadurch gekennzeichnet, dass** es die Schritte umfasst, bestehend aus:

  - Auswählen der vom System zu berücksichtigenden Informationen,
  - Nachschlagen in einer Profiltabelle (46), die eine relevante Variable (V) und ein bestimmtes Bedeutungsniveau (I) umfasst, für jede dieser zu berücksichtigenden Informationen,
  - sequentielles Ausgeben der Nachrichten in einer hierarchisierten Form, insbesondere in absteigender Reihenfolge des Bedeutungsniveaus (I).

16. Fahrerassistenzverfahren gemäß Anspruch 15, **dadurch gekennzeichnet, dass** es einen Schritt umfasst, bestehend im sequentiellen Abtasten der zu berücksichtigenden Informationen, um unter Bezugnahme auf die jeder Information zugeordneten Profiltabelle das Bedeutungsniveau (I) des sofortigen Wertes der dieser Information zugeordneten relevanten Variablen (V) zu bestimmen.

17. Fahrerassistenzverfahren gemäß Anspruch 15, **dadurch gekennzeichnet, dass** es die folgenden Schritte umfasst:

  - Stapeln der nacheinander empfangenen, zu berücksichtigen Informations-Frames,
  - Nachschlagen in der dieser Information zugeordneten Profiltabelle für jede Information dieses Stapels derart, dass der Frame jeder Information des Stapels mit Elementen der dieser Information zugeordneten Profiltabelle vervollständigt wird,
  - Einordnen des Stapels in absteigender Reihenfolge des Bedeutungsniveaus (I),
  - sequentielles Ausgeben der Nachrichten in absteigender Reihenfolge des Bedeutungsniveaus (I).

**Claims**

1.  A driver-assistance system for a vehicle, comprising a smartphone (3) and a remote interface device (1) which are connectable to each other and which have means (14, 17) able to deliver a message in a visual and/or audio form, wherein the remote interface device (1) includes means able to receive information to be taken into account from the smartphone (3), **characterised in that** the smartphone (3) or remote interface device (1) includes means able to prioritise this information to be taken into account, according to a priority order which is a function of the value of a level of importance (I) assigned to each piece of the information to be taken into account, and the remote interface device (1) is able to sequentially deliver it as messages, according to said priority order.

2.  The driver-assistance system according to claim 1, **characterised in that** said priority order is the decreasing order of the level of importance (I).

3.  The driver-assistance system according to any of claims 1 or 2, **characterised in that** the remote interface device (1) includes means able to receive information to be taken into account from information generating external sources (2, 44).

4.  The driver-assistance system according to any of the previous claims, **characterised in that** said priority order is defined in a memory (16) of the remote interface device (1) and/or in a specific application recorded in a memory (7) of the smartphone (3).

5.  The driver-assistance system according to any of the previous claims, **characterised in that** the smartphone (3) and/or the remote interface device (1) include information selecting means (51) able to enable selection of information to be taken into account, especially before a drive begins.

6.  The driver-assistance system according to any of the previous claims, **characterised in that** the smartphone (3) or the remote interface device (1) includes sequencing means (20) able to successively select information emitted by the smartphone (3) and/or information generating external sources (2, 44).

7.  The driver-assistance system according to any of the previous claims, **characterised in that** the smartphone (3) and/or remote interface device (1) include(s) means able to determine a relevant variable (V) for each piece of information to be taken into account.

8.  The driver-assistance system according to claim 7, **characterised in that** the smartphone (3) and/or the remote interface device (1) include means able to assign the level of importance (I) to information to be taken into account as a function of the value of their relevant variable (V) according to predefined criteria.

9.  The driver-assistance system according to claim 8, **characterised in that** said criteria are predefined in a profile table unique to each piece of the information to be taken into account and also containing the relevant variable (V) and the level of importance (I) respectively associated with at least one value threshold of the relevant variable (V).

10. The driver-assistance system according to one of claims 7 to 9, **characterised in that** it includes means able to determine the instant value of the relevant variable (V).

11. The driver-assistance system according to one of claims 9 or 10, **characterised in that** the profile table (46) contains the nature and/or form of the message to be delivered.

12. The driver-assistance system according to any of the previous claims, **characterised in that** the remote interface device (1) includes means able to, in case of temporary non-connection with the smartphone (3), switch to a so-called simplified mode and includes at least one accelerometer (62) and/or at least one GPS (64).

13. The driver-assistance system according to any of the previous claims, **characterised in that** the remote interface device (1) includes display means (17) able to deliver the prioritised information in a main display zone (17a) preferentially disposed in the centre of the display means (17).

14. The driver-assistance system according to any of the previous claims, **characterised in that** the remote interface device (1) includes means able to, via a short range communication module (19), especially "Bluetooth", detect and register the different persons present in the vehicle, by emitting from a short range communication module of their smartphones.

15. A driver-assistance method for a vehicle, implementing a driver-assistance system comprising a smartphone (3) and a remote interface device (1) which are connectable to each other and which have means (14, 17, 25) able to deliver messages in visual and/or audio form, **characterised in that** it includes the steps of:

- selecting information to be taken into account by the system,
- looking up, for each piece of this information to be taken into account, a profile table (46) comprising a relevant variable (V) and a certain level of importance (I),
- sequentially delivering the messages in a prioritised form, especially in decreasing order of the level of importance (I).

16. The driver-assistance method according to claim 15, **characterised in that** it includes a step of sequentially scanning the information to be taken into account received, in order to determine, with reference to the profile table associated with each piece of information, the level of importance (I) of the instant value of the relevant variable (V) associated with this piece of information.

17. The driver-assistance method according to claim 15, **characterised in that** it includes the steps of:

- stacking frames of the information to be taken into account successively received,
- looking up, for each piece of information of this stack, the profile table associated with this piece of information, so as to complete the frame of each piece of information of the stack with elements of the profile table associated with this piece of information,
- classifying the stack in decreasing order of level of importance (I),
- sequentially delivering the messages in decreasing order of level of importance (I).

FIG 1

EP 3 529 100 B1

12 — GPS

22 — Navigation GPS

24 — Trafic

26 — Alertes radars

34 — GSM

30 — Appels

32 — SMS

2 — OBD

44 — Pression

36 — Autonomie carburant

38 — Infos moteur

42 — Pression pneus

20 — Séquenceur calculateur

46 — Tables de profil

50 — Gestion dispositif interface déporté

47 — Tables des informations actives

48 — Table des préférences de conduite

17a / 17b — Zone d'affichage principale

18 — Gestion affichage

1

3

FIG 2

```
                    ┌─────────────────────┐
                    │   Sélection 1ère info│
                    │      souhaitée       │
                    └─────────────────────┘
                              │
                         ◇─────────◇              ┌──────────────┐
                        │Information │    Non      │ Information  │
                        │  active ?  │─────────────▶│  suivante    │
                         ◇─────────◇              └──────────────┘
                             │ Oui
                    ┌─────────────────────┐        ┌──────────────┐
                    │  Consultation  de la│◀──────▶│  Tables de   │
                    │    table de profil  │        │    profil    │
                    │  de cette information│        └──────────────┘
                    └─────────────────────┘
                              │
                    ┌─────────────────────┐
                    │  Détermination de la│
                    │  variable pertinente V│
                    └─────────────────────┘
                              │
                    ┌─────────────────────┐
                    │  Lecture de la valeur de│
                    │  la variable pertinente V│
                    └─────────────────────┘
                              │
                    ┌─────────────────────┐
                    │  Détermination du niveau│
                    │  de seuil de celle-ci│
                    └─────────────────────┘
                              │
                    ┌─────────────────────┐
                    │  Détermination  du   │
                    │  niveau d'importance I│
                    │  de l'information active│
                    └─────────────────────┘
                              │
                    ┌─────────────────────┐        ┌──────────────┐
                    │  Mise en mémoire    │        │  Table des   │
                    │  paramètres dans table│──────▶│ informations │
                    │    infos actives     │        │   actives    │
                    └─────────────────────┘        └──────────────┘
```

**FIG 3**

```
                         ◇─────────◇
                        │ Dernière  │    Non
                        │information │─────────────────────────────▶
                        │souhaitée ? │
                         ◇─────────◇
                             │ Oui
                    ┌─────────────────────┐
                    │  Classement Table infos│
                    │   actives par ordre  │
                    │  décroissant de niveau│
                    │    d'importance I    │
                    └─────────────────────┘
                              │
                    ┌─────────────────────┐        ┌──────────────┐
                    │   Affichage de      │        │              │
                    │   l'information     │──────▶ │   / / /      │
                    │  correspondant à Imax│        │              │
                    │  de la Table infos actives│    └──────────────┘
                    └─────────────────────┘              1

                         ◇─────────◇
                        │  Temps    │    Oui       ┌──────────────┐
                        │affichage maxi│────────────▶│  Désactiver  │
                        │ terminé ?  │             │   message    │
                         ◇─────────◇              └──────────────┘
                             │ Non
                         ◇─────────◇
                        │  Message  │    Oui       ┌──────────────┐
                        │ acquitté ?│────────────▶│ Placer message│
                         ◇─────────◇              │  dans liste des│
                             │ Non                │  messages lus │
                         ◇─────────◇              └──────────────┘
                   Non  │  Temps    │    Oui
                 ◀──────│affichage mini│──────────────────▶
                        │ terminé ?  │
                         ◇─────────◇
```

FIG 4

Sélection informations
souhaitées

Préférences
de conduite

Lancement des
applications et arrivée du
flux d'informations

Mise en pile des flux
d'informations

*« Dépilage »*

Consultation des
tables de profil

Tables de
profil

Compléte la Trame et la
place dans la pile des
informations classées

Mise en pile classée
suivant le niveau
d'importance décroissant

17a

Affichage des éléments
de l'information en
sommet de pile

14

1

Temps
affichage maxi
terminé ?

Oui

25

Désactiver
message

Non

Message
acquitté ?

Oui

Placer message
dans liste des
messages lus

Non

Non

Temps
affichage mini
terminé ?

Oui

# FIG 5

24

**FIG 6**

Ecran
tactile

Mémoire

Module
communication
courte
distance

Processeur

GSM

GPS

Module
communication
courte
distance

Gestion
affichage/
vocal

Mémoire

Processeur

Accéléromètre

GPS

Module
communication
courte
distance

Mémoire

Processeur

Prise OBD

FIG 7

FIG 8

FIG 9

**EP 3 529 100 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- FR 2896462
- EP 0903264 A